(19)

Europäisches
Patentamt
European
Patent Office
Office européen
des brevets

(11)  **EP 2 343 161 A1**

(12)  **EUROPEAN PATENT APPLICATION**

(43) Date of publication:
**13.07.2011  Bulletin 2011/28**

(51) Int Cl.:
*B25J 9/00* (2006.01)          *B25J 9/16* (2006.01)
*B62D 57/032* (2006.01)

(21) Application number: **11150390.0**

(22) Date of filing: **07.01.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.01.2010  KR 20100002354**

(71) Applicant: **Samsung Electronics Co., Ltd.
Suwon-si, Gyeonggi-do 442-742 (KR)**

(72) Inventors:
• **Park, Joong Kyung
  Gyeonggi-do (KR)**

• **Roh, Kyung Shik
  Gyeonggi-do (KR)**
• **Kwon, Woong
  Gyeonggi-do (KR)**
• **Lee, Min Hyung
  Gyeonggi-do (KR)**
• **Kwak, Ho Seong
  Seoul (KR)**

(74) Representative: **D'Halleweyn, Nele Veerle Trees
Gertrudis et al
Arnold & Siedsma
Sweelinckplein 1
2517 GK The Hague (NL)**

(54)  **Walking robot and method of controlling the same**

(57)     Disclosed herein are an apparatus and method for controlling stable walking of a robot based on torque. In a method of enabling stable walking by controlling torque of a hip joint portion using a Finite State Machine (FSM) without solving a complicated dynamic equation, torque of a stance leg is finally calculated using pose control torque of an upper body, pose control torque of a swing leg, and initial pose control torque of a stance leg supporting the upper body. Accordingly, the robot may stably walk with torque balance. Since gravity compensation torque is applied, a torso of the robot is not inclined and the pose of the robot is stably maintained.

FIG. 5

**Description**

Embodiments relate to a walking robot which controls stable walking based on torque, and a method of controlling the same.

In general, research into a walking robot which has a joint structure similar to that of a human and coexists with the humans in a working and living space has been actively conducted. The walking robot includes a multilegged walking robot having multiple legs such as two legs or three legs. For stable walking, an actuator such as an electric motor or a hydraulic motor mounted in each joint is driven. Examples of a method of driving an actuator include a position-based Zero Moment Point (ZMP) control method of providing a command angle, that is, a command position, of each joint and controlling each joint to move according to the command angle, and a Finite State Machine (FSM) control method of providing command torque of each joint and controlling each joint to move according to the command torque.

In the ZMP control method, a walking direction, a stride width, a walking rate and the like are determined in advance so as to satisfy a ZMP constraint, that is, a condition in which a ZMP is present in a safe area (which corresponds to the area of one foot in the case where the robot is supported by one foot or corresponds to a small area which is set in consideration of safety in a convex polygon including the areas of two feet in the case where the robot is supported by two feet) of a stance polygon formed by stances of legs of the robot, the walking pattern of each leg corresponding to the determination is generated, and the walking trajectory of each leg is calculated according to the walking pattern. The angle of the joint of each leg is calculated by inverse Kinematic calculation of the calculated walking trajectory and a desired control value of each joint is calculated based on the current angle and the desired angle of each joint. Servo control is performed such that each leg moves along the calculated walking trajectory during every control time period. That is, determination as to whether the position of each leg accurately moves along the walking trajectory according to the walking pattern is performed. If each leg deviates from the walking trajectory, the torque of the motor is adjusted such that each leg accurately moves along the walking trajectory.

Since the ZMP control method is a position-based control method, accurate position control is possible. However, since accurate angle control of each joint is performed in order to control the ZMP, high servo gain is necessary. Therefore, since high current is necessary, energy efficiency is low and joint rigidity is high, thereby giving surrounding a big shock. Since Kinematic Singularity is avoided in order to calculate the angle of each joint, the robot always bends its knees while walking. Thus, the robot may unnaturally walk unlike a human.

In contrast, in the FSM control method, instead of the method of controlling the walking of the robot according to the position thereof at every control time, each operation state of the robot is defined in advance (Finite State), desired torque of each joint is calculated by referring to each operation state while walking, and walking is controlled according to the desired torque of each joint. Since the torque of each joint is controlled while walking, low servo gain is necessary, energy efficiency is high and joint rigidity is low, thereby providing safety to surroundings. In addition, since Kinematic Singularity does not need to be avoided, the robot may naturally walk in a state of stretching out its knees similar to a human.

However, in the FSM control method, since the walking of the robot is controlled according to the operation state defined in advance, walking control is inaccurate and thus the robot may lose balance. Accordingly, a separate balancing operation to ensure that the robot maintains balance is performed regardless of a walking operation. For a robot balancing operation, command torque to keep stable balance is obtained. In order to obtain command torque, a very complicated dynamic equation is solved. However, up to now, this method has not been implemented in a robot having legs having a joint structure with 6 degrees of freedom.

Therefore, it is an aspect to provide a walking robot which controls torque of each joint using a Finite State Machine (FSM) without solving a complicated dynamic equation, and a method of controlling the same.

Additional aspects will be set forth in part in the description which follows and, in part, will be obvious from the description, or may be learned by practice of the embodiments.

In accordance with one aspect, there is provided a walking robot including: an upper body; a plurality of walking legs connected to the upper body; a desired trajectory generator to determine states of the plurality of legs while walking to generate a desired trajectory; a desired torque calculator to calculate pose control torques of the upper body and the plurality of legs which move along the generated desired trajectory and to calculate desired torque of a stance leg supporting the upper body using the calculated pose control torques; and a servo controller to transfer the calculated desired torque to a hip joint of the stance leg to control the walking of the robot.

The walking robot may be a robot having two or more legs, which walks based on torque.

The states of the plurality of legs may be divided into a stance state which supports the upper body and a swing state, depending on whether or not feet of the plurality of legs touch the ground.

The desired trajectory generator may generate desired angles of the upper body and thighs of the plurality of legs relative to the ground according to the states of the plurality of legs and generate an inclination angle trajectory of the thigh of the stance leg relative to the ground according to the generated desired angles.

Pose control torques of the upper body and the plurality of legs may include pose control torque of the upper body, pose control torque of a swing leg, and initial pose control torque of the stance leg.

The desired torque calculator may calculate desired torque of the hip joint of the stance leg using the pose control torque of the upper body, the pose control torque of the swing leg, and the initial pose control torque of the stance leg.

The desired torque calculator may calculate gravity compensation torque of the walking robot.

The desired torque calculator may compensate for the calculated desired torque of the hip joint using the gravity compensation torque.

The desired torque calculator may divide torque ratios of the upper body and the plurality of legs in order to control the pose of the upper body and the plurality of legs.

In accordance with another aspect, there is provided a method of controlling a walking robot including an upper body and a plurality of legs connected to the upper body, the method including: determining states of the plurality of legs when the walking robot walks to generate a desired trajectory; calculating pose control torques of the upper body and the plurality of legs which move along the generated desired trajectory and calculating desired torque of a stance leg supporting the upper body; and transferring the calculated desired torque to a hip joint of the stance leg to control the walking of the waling robot.

The generation of the desired trajectory may include generating desired angles of the upper body and thighs of the plurality of legs relative to the ground according to the states of the plurality of legs and generating an inclination angle trajectory of the thigh of the stance leg relative to the ground according to the generated desired angles.

The calculation of the desired torque of the stance leg may include calculating desired torque of the hip joint of the stance leg using the pose control torque of the upper body, the pose control torque of the swing leg, and the initial pose control torque of the stance leg.

The calculated desired torque of the hip joint may keep torque balance of the stance leg.

The method may further include calculating gravity compensation torque of the walking robot, and the calculation of the desired torque of the stance leg may compensate for the calculated desired torque of the hip joint using the gravity compensation torque.

The calculation of the desired torque of the stance leg may include dividing torque ratios of the upper body and the plurality of legs to control the pose of the upper body and the plurality of legs.

The method may further comprise determining sensor information of the walking robot.

According to the walking robot and the method of controlling the same, torque of a hip joint portion is controlled using a Finite State Machine (FSM) without a complicated dynamic equation such that the robot stably walks.

Since torque of a stance leg is finally calculated using pose control torque of an upper body, pose control torque of a swing leg, and initial pose control torque of a stance leg supporting the upper body, the robot may stably walk with torque balance.

Since the gravity compensation torque is applied, the torso is not inclined when the foot is raised.

Since the balance of the robot is kept based on the torque of the stance leg, the method is simple and is applied to the robot having joints with 6 degrees of freedom.

BRIEF DESCRIPTION OF THE DRAWINGS

These and/or other aspects of the embodiments will become apparent and more readily appreciated from the following description of the embodiments, taken in conjunction with the accompanying drawings of which:

FIG. 1 is a diagram showing the appearance of a robot according to an embodiment;

FIG. 2 is a diagram showing the structures of main joints of the robot shown in FIG. 1;

FIG. 3 is a diagram showing operation states of the robot and control operations of the operation states when the robot walks based on a Finite State Machine (FSM), according to the embodiment;

FIG. 4 is a diagram showing leg states when the robot walks, according to the embodiment;

FIG. 5 is a block diagram of a structure to control the walking of the robot according to the embodiment;

FIG. 6 is a side view showing leg states when the robot walks according to the embodiment;

FIG. 7 is a front view showing leg states when the robot walks according to the embodiment; and

FIG. 8 is a flowchart illustrating a method of controlling the walking of the robot according to the embodiment.

DETAILED DESCRIPTION

Reference will now be made in detail to the embodiments, examples of which are illustrated in the accompanying drawings.

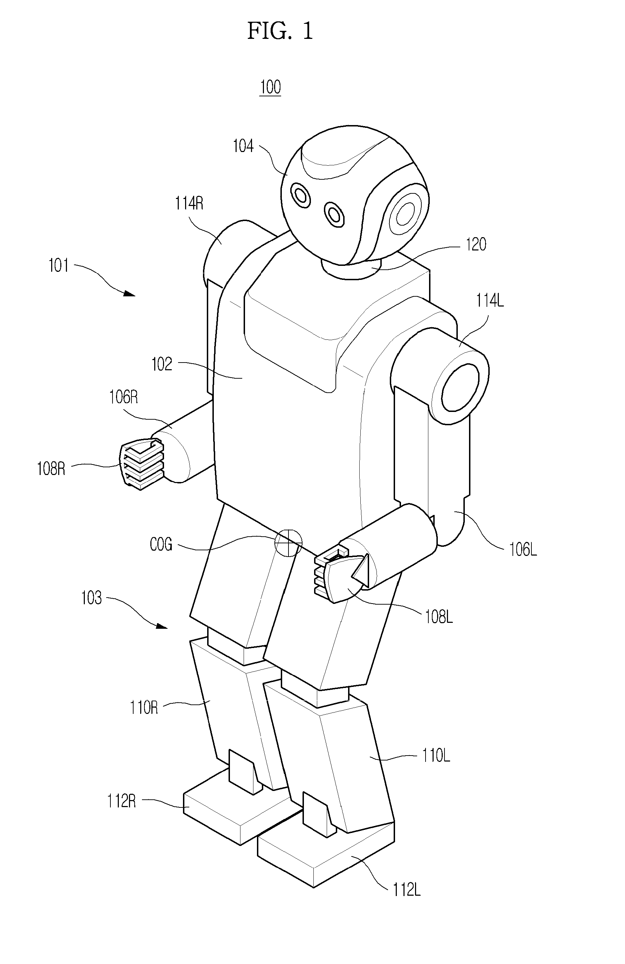

FIG. 1 is a diagram showing the appearance of a robot according to an embodiment.

In FIG. 1, the robot 100 according to the embodiment is a bipedal robot which walks erect using two legs 110 similar to a human, and includes an upper body 101 including a torso 102, a head 104 and arms 16, and a lower body 103 including two legs 110R and 110L.

The upper body 101 of the robot 100 includes the torso 102, the head 104 connected to the upper portion of the torso 102 via a neck 120, two arms 106L and 106R connected to both sides of the upper portion of the torso 102 via shoulders 114L and 114R, and hands 108L and 108R respectively connected to ends of the two arms 106L and 106R.

The lower body 103 of the robot 100 includes the two legs 110L and 110R connected to both sides of a lower portion of the torso 102 of the upper body 101 and feet 112L and 112R connected to ends of the two legs 110L and 110R.

In the reference numerals, R and L denote the right and the left of the robot 100, respectively, and Center of Gravity (COG) denotes Center of gravity of the robot 100.

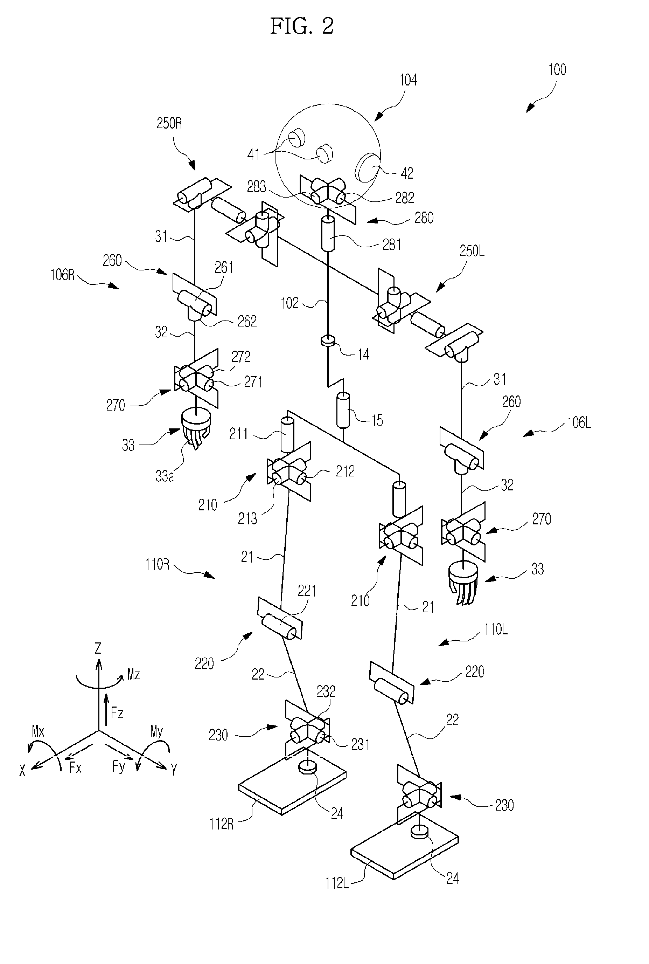

FIG. 2 illustrates the structures of main joints of the robot shown in FIG. 1.

In FIG. 2, a pose sensor 14 is provided in the torso 102 of the robot 100. The pose sensor 14 may detect an inclination angle of the upper body 101 relative to a vertical axis and an angular velocity thereof to generate pose information. The pose sensor 14 may be provided not only in the torso 102 but also in the head 104.

A waist joint portion 15 with a degree of freedom in a yaw direction is provided in the torso 102 such that the upper body 101 may be rotated.

Cameras 41 to photograph surroundings and a microphone 42 to receive user voice are provided in the head 104 of the robot 100.

The head 104 is connected to the torso 102 of the upper body 101 via a neck joint portion 280. The neck joint portion 280 has 3 degrees of freedom including a yaw-direction (Z-axis) rotation joint 281, a pitch-direction (Y-axis) rotation joint 282 and a roll-direction (X-axis) rotation joint 283.

Motors (e.g., actuators such as an electrical motor and a hydraulic motor) to rotate the head 104 are connected to the rotation joints 281, 282 and 283 of the neck joint portion 280.

Each of the two arms 106L and 106R of the robot 100 has an upper link 31, a lower link 32 and a hand 33.

The upper link 31 is connected to the upper body 101 via each of shoulder joint portions 250L and 250R, the upper link 31 and the lower line 32 are connected to each other via an elbow joint portion 260, and the lower link 32 and the hand 33 are connected to each other via a wrist joint portion 270.

The shoulder joint portions 250L and 250R are mounted at both sides of the torso 102 of the upper body 101 to connect two arms 106L and 106R to the torso 102 of the upper body 101.

The elbow joint portion 260 may have two degrees of freedom including a pitch-direction rotation joint 261 and a yaw-direction rotation joint 262.

The wrist joint portion 270 may have two degrees of freedom including a pitch-direction rotation joint 271 and a roll-direction rotation joint 272.

Five fingers 33a are mounted in the hands 33. A plurality of joints (not shown) driven by the motors may be mounted in each of the five fingers 33a. The five fingers 33a perform various operations such as grasping an object or indication of a specific direction in interlock with the motion of the arm 106.

Each of the two legs 110L and 110R of the robot 100 may have a thigh link 21, a crus link 22 and a foot 112L or 112R.

The thigh link 21 corresponds to the thigh of a human and is connected to the torso 102 of the upper body 101 via a hip joint portion 210. The thigh link 21 and the crus link 22 are connected to each other via a knee joint portion 220, and the crus link 22 and the foot 112L or 112R are connected to each other via an ankle joint portion 230.

The hip joint portion 210 may have 3 degrees of freedom including a yaw-direction (Z-axis) rotation joint 211 (hip jaw joint), a pitch-direction (Y-axis) rotation joint 212 (hip pitch joint) and a roll-direction (X-axis) rotation joint 213 (hip roll joint).

The knee joint portion 220 may have one degree of freedom including a pitch-direction rotation joint 221.

The ankle joint portion 230 may have two degrees of freedom including a pitch-direction rotation joint 231 and a roll-direction rotation joint 232.

Since six rotation joints are provided in each of the two legs 110L and 110R with respect to the hip joint portion 210, the knee joint portion 220 and the ankle joint portion 230, 12 rotation joints are provided with respect to two legs 110L and 110R.

Meanwhile, in each of the two legs 110L and 11R, a multi-axis Force and Torque (F/T) sensor 24 is mounted between the foot 112L or 112R and the ankle joint portion 230. The F/T sensor 24 measures three directional components Fx, Fy and Fz of force transferred from the foot 112L or 112R and three directional components Mx, My and Mz of moment so as to detect landing of the foot 112L or 112R and load applied to the foot 112L or 112R.

Although not shown in the drawings, actuators such as motors to drive the rotation joints are provided in the robot 100. A walking control unit to control the overall operation of the robot 100 adequately controls the motors so as to perform various operations of the robot 100.

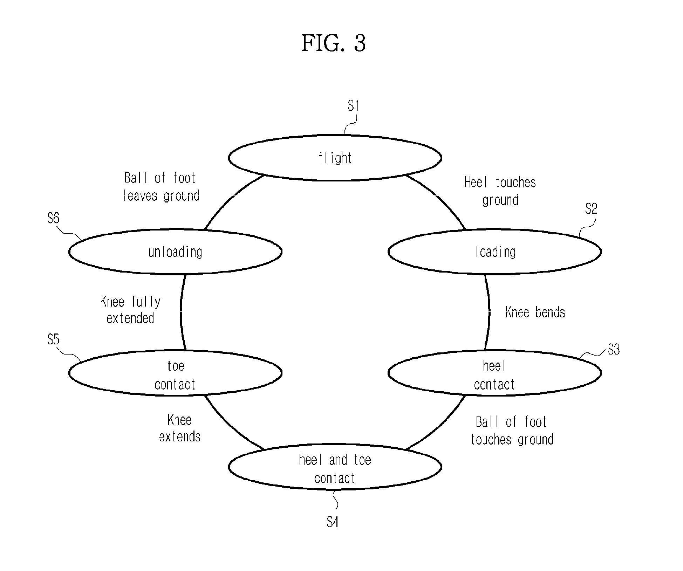

FIG. 3 is a diagram showing operation states of the robot and control operations of the operation states when the robot walks based on a Finite State Machine (FSM), according to the embodiment.

In FIG. 3, in a torque-based Finite State Machine (FSM) control method, the operation states of the robot 100 are divided into a plurality of operation states (e.g., six operation states S1, S2, S3, S4, S5 and S6) defined in advance. The operation states S1, S2, S3, S4, S5 and S6 denote poses of one leg 110L or 110R of the robot 100 while walking. The pose of the robot 100 is adequately switched such that the robot stably walks.

A first operation state S1 (flight) denotes a pose in which the leg 110L or 110R swings, a second operation state S2 (loading) denotes a pose in which the foot 112 is put down on the ground, a third operation state S3 (heel contact) denotes a pose in which the heel of the foot 112 touches the ground, a fourth operation state S4 (heel and toe contact) denotes a pose in which the heel and the toe of the foot 112 simultaneously touch the ground, a fifth state S5 (toe contact) denotes a pose in which the toe of the foot 112 touches the ground, and a six operation state S6 (unloading) denotes a pose in which the foot 112 is raised from the ground.

In order to switch one operation state to another operation state, a control action to switch the operation state is necessary.

More particularly, if the first operation state S1 is switched to the second operation state S2 (S1->S2), a control operation (heel touches the ground) to enable the heel of the foot 112 to touch the ground is necessary.

If the second operation state S2 is switched to the third operation state S3 (S2->S3), a control operation (knee bends) to bend the knee (more particularly, the knee joint portion) of the foot 112 which touches the ground is necessary.

If the third operation state S3 is switched to the fourth operation state S4 (S3->S4), a control operation (ball of foot touches the ground) to enable the toe of the foot 110 to touch the ground is necessary.

If the fourth operation state S4 is switched to the fifth operation state S5 (S4->S5), a control operation (knee extends) to extend the knee of the foot 112 which touches the ground is necessary.

If the fifth operation state S5 is switched to the sixth operation state S6 (S5->S6), a control operation (knee fully extended) to fully extend the knee of the foot 112 which touches the ground is necessary.

If the sixth operation state S6 is switched to the first operation state S1 (S6->S1), a control operation (ball of foot leaves the ground) to raise the toe of the foot 112 from the ground is necessary.

Accordingly, in order to execute the control action, the robot 100 calculates a torque command of each joint in correspondence with each control action, and outputs the calculated torque command to the actuator such as the motor mounted in each joint so as to drive the actuator.

In the torque-based FSM control method, the walking of the robot 100 is controlled according to the operation states S1, S2, S3, S4, S5 and S6 defined in advance. However, if the operation states S1, S2, S3, S4, S5 and S6 are only switched, the walking of the robot may be inadequately controlled. Thus, the robot 100 may lose balance.

Accordingly, in the torque-based FSM control method according to the embodiment, desired torque (hip torque) of the leg 110L or 110R supporting the torso 102 of the robot 100 is calculated according to the states of the two legs 110L and 110R such that the robot 100 does not lose balance, and the calculated desired torque is output to the actuator such as the motor mounted in the hip joint portion 210 such that the robot 100 stably and naturally walks while maintaining balance.

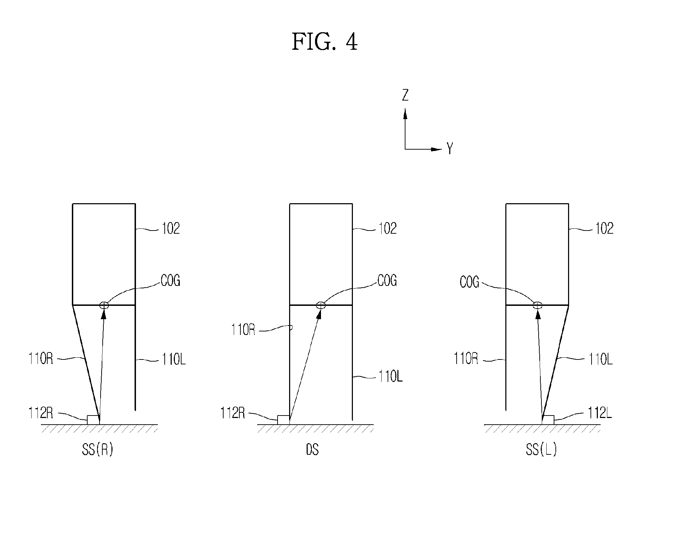

The states of the two legs 110L and 110R are determined depending on which of the feet 112L and 112R is in a supporting state or a swing state based on the sensor information detected by the F/T sensor 24 provided between the foot 112L or 112R and the ankle joint portion 230, which will be described in detail with reference to FIG. 4.

FIG. 4 illustrates leg states when the robot walks, according to the embodiment, in which the torso 102 and the left and right legs 110L and 110R of the robot 100 are shown on a Y Z plane of the pitch direction (Y axis) and the yaw direction (Z axis), and the states in which the robot walks forward while alternately using its feet 112L and 112R are schematically shown on the Y-Z plane.

In FIG. 4, the leg states of the robot 100 include a total of three states including a Double Support (DS) state, a Single Support Right SS(R) state, and a Single Support Left SS(L) state.

In the embodiment, since the desired torque (hip torque) of the leg 110L or 110R supporting the torso 102 in the SS(L) or SS(R) state is calculated such that the robot 100 stably walks, only the SS(L) or SS(R) state will be described in detail.

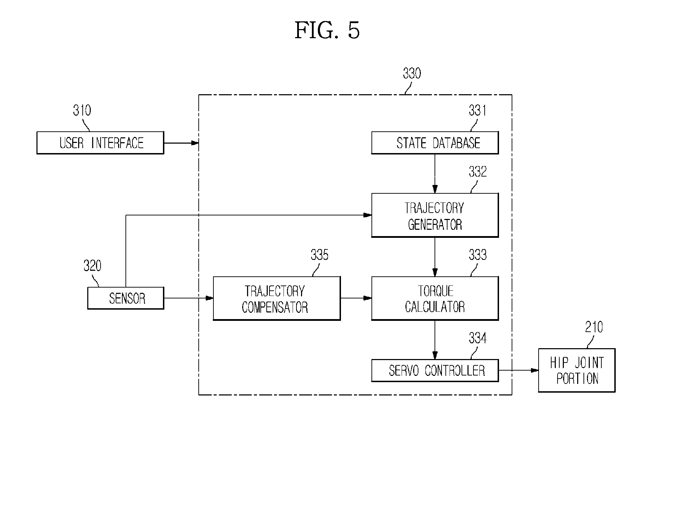

FIG. 5 illustrates a structure to control the walking of the robot according to the embodiment, which includes a user interface 310, a sensor 320, a walking controller 330 and a hip joint portion 210.

The user interface 310 receives a user command to control the walking of the robot 100.

The sensor 320 includes the pose sensor 14 which is mounted in the torso 102 of the robot 100 so as to detect the inclination or pose of the upper body 101, and the F/T sensor 24 which is mounted between the foot 112 and the ankle joint portion 230 of the robot 100 to detect whether the foot 112 touches the ground.

The walking controller 330 is a Proportional-Derivative (PD) controller to control the walking of the robot 100 based on the walking command received via the user interface 310 and the sensor information detected by the sensor 320, and includes a state database 331, a trajectory generator 332, a desired torque calculator 333, a servo controller 334 and a trajectory compensator 335.

The state database 331 stores leg state data of the robot 100 based on the FSM while walking and operation state data of each of joints 15 and 210 corresponding to the leg state of the robot 100.

The FSM sequentially indicates a variation in restricted operation states of the torso 102 and the legs 110L and 110R. The restricted operation states of the legs 110L and 110R are determined depending on which of the legs 112L and 112R is in a stance state or a swing state.

The trajectory generator 332 generates desired trajectories of angles of the torso 102 and the legs 110L and 110R of the robot relative to the ground, that is, generates desired angles θd of the torso 102 and the thigh of the robot 100 according to the leg states of the robot 100 stored in the state database 331, and generates desired trajectories of the torso 102 and the thigh, in which variations in desired angles θd with time are connected using curved lines.

The desired angles θd indicate degrees to which the torso 102 and the thigh are inclined relative to the ground according to the operation states of the torso 102 and the thigh.

The desired trajectories indicate variations in desired angles θd with time.

The torque calculator 333 calculates pose control torque τTorso and τSwingHip to follow the desired trajectories of the torso 102 and the thigh, which are generated by the trajectory generator 332, and calculates desired torque τA to be used in a hip joint (more particularly, a hip pitch joint and a hip roll joint) of the leg 110L or 110R supporting the torso 102 based on the calculated pose control torque τTorso and τSwingHip.

The torque calculator 333 calculates the desired torque τAto be applied to the hip joint portion 210 of the leg 110L or 110R supporting the torso 102 using Equation 1.


Equation 1


$$\tau A = - \tau Torso - \tau SwingHip + \tau StanceHip - \tau Gravity$$


In Equation 1, τA denotes desired torque to be used in the hip joint of the leg 110L or 110R supporting the torso 102, τTorso denotes pose control torque of the upper body 101 determined for rotation of the torso 102, τSwingHip denotes torque determined for moving the swing leg 110R or 110L, τStanceHip denotes basic desired torque for basic pose control of the stance leg 110L or 110R, and τGravity denotes a gravity compensation torque of the robot 100.

In Equation 1, τStanceHip is equal to the torque of the stance leg 110L or 110R in the direction, and τTorso, τTwingHip, and τGravity act on the stance leg 110L or 110R with reactive force, to which a sign "-" is attached.

In addition, the torque calculator 333 may perform calculation by changing Equation 1 of calculating the desired torque τA to be applied to the hip joint portion 210 of the leg 110L or 110R supporting the torso 102 of the robot 100 to Equation 2.


Equation 2


$$\tau A = - K1^* \tau Torso - K2^* \tau SwingHip + K3^* \tau StanceHip - \tau Gravity$$


In Equation 2, K1, K2 and K3 are variables to control the poses of the legs 110L and 110R and the upper body 101 according to the operation of the robot 100.

For example, if K1 is increased and K2 and K3 are decreased, the pose control of the upper body 101 is more smoothly performed compared with the pose control of the legs 110L and 110R. This state may prevent the upper body 101 from swinging when the robot carries an object using the upper body 101 or the robot performs photographing using the cameras 41 mounted in the head 104 while walking.

If K2 and K3 are increased and K1 is decreased, the pose control of the legs 110L and 110R is more smoothly performed compared with the pose control of the upper body 101. This state is useful when the robot takes one step at a desired position using the foot 112L or 112R.

In the torque control method, the torque of the stance leg 110L or 110R may be divided into pose control torque τTorso of the upper body 101, pose control torque τSwingHip of the swing leg 110R or 110L, basic pose control torque τStanceHip of the stance leg 110L or 110R, and gravity compensation torque τGravity. The torques τTorso, τSwingHip, τStanceHip, and τGravity are in equilibrium of force so as to finally calculate the desired torque τA.

The pose control torque τTorso of the upper body 101, the pose control torque τSwingHip of the swing leg 110R or 110L, and the basic pose control torque τStanceHip of the stance leg 110L or 110R are respectively calculated using Equations 3 to 5 using PD control.

Equation 3

$$\tau Torso = kp(\theta d\_Torso - \theta c\_Torso) + kd(d\theta d\_Torso/dt - d\theta c\_Torso/dt)$$

In Equation 3, kp denotes P gain of PD control, kd denotes D gain of PD control, θd_Torso denotes a desired angle (e.g., 0) of the upper body 101, θc_Torso denotes an actual angle between the upper body 101 and the ground, dθd_Torso/dt denotes a desired angular velocity calculated by differentiating the desired angle of the upper body 101, and dθc_Torso/dt denotes an actual angular velocity calculated by differentiating an actual angle of the upper body 101.

Equation 4

$$\tau SwingHip = kp(\theta d\_SwingHip - \theta c\_SwingHip) + kd(d\theta d\_SwingHip/dt - d\theta c\_SwingHip/dt)$$

In Equation 4, kp denotes P gain of PD control, kd denotes D gain of PD control, θd_SwingHip denotes a desired angle of the thigh of the swing leg 110R or 110L, θc_SwingHip denotes an actual angle between the thigh of the swing leg 110R or 110L while walking and the ground, dθd_SwingHip/dt denotes a desired angular velocity calculated by differentiating the desired angle of the thigh of the swing leg 110R or 110L, and dθc_SwingHip/dt denotes an actual angular velocity calculated by differentiating an actual angle of the thigh of the swing leg 110R or 110L.

Equation 5

$$\tau StanceHip = kp(\theta d\_StanceHip - \theta c\_StanceHip) + kd(d\theta d\_StanceHip/dt - d\theta c\_StanceHip/dt)$$

In Equation 5, kp denotes P gain of PD control, kd denotes D gain of PD control, θd_StanceHip denotes an initial desired angle for basic pose control of the thigh of the stance leg 110R or 110L, θc_StanceHip denotes an initial actual angle between the thigh of the stance leg 110R or 110L and the ground, dθd_StanceHip/dt denotes an initial desired angular velocity calculated by differentiating the initial desired angle of the thigh of the stance leg 110R or 110L, and dθc_StanceHip/dt denotes an initial actual angular velocity calculated by differentiating an initial actual angle of the thigh of the stance leg 110R or 110L.

In addition to the method of using Equations 3 to 5, predetermined torques may be set to adequate values of the torque trajectories with respect to time through experimentation so as to be used as the pose control torque τTorso of the upper body 101, the pose control torque τSwingHip of the swing leg 110R or 110L, and the basic pose control torque τStanceHip of the stance leg 110L or 110R.

In addition, gravity compensation torquer τGravity to be used for calculating the desired torque τA is torque to compensate for Center of Gravity (COG) of the upper body 101 and the swing leg 110R or 110L excluding the stance leg 110L or 110R, and torque is calculated by using a horizontal distance from the hip joint of the stance leg 110L or 110R to the COG as moment arm.

The servo controller 334 provides the desired torque τA calculated by the torque calculator 333 to the hip joint portion 210 and outputs a torque control signal corresponding to the desired torque τA calculated to drive the actuator, such as the motor mounted in the hip joint portion 210 to the hip joint portion 210.

Accordingly, the hip joint portion 210 receives the torque control signal from the servo controller 334 and drives the actuator such as the motor mounted in the hip joint portion 210 such that the robot 100 stably walks along the desired trajectory of the hip joint while keeping balance.

The trajectory compensator 335 compensates for the desired trajectory of the hip joint potion 210 based on the sensor information detected by the sensor 320. The compensated desired trajectory is transferred to the torque calculator 333 and the torque calculator 333 calculates the desired torque τA to follow the compensated desired trajectory again.

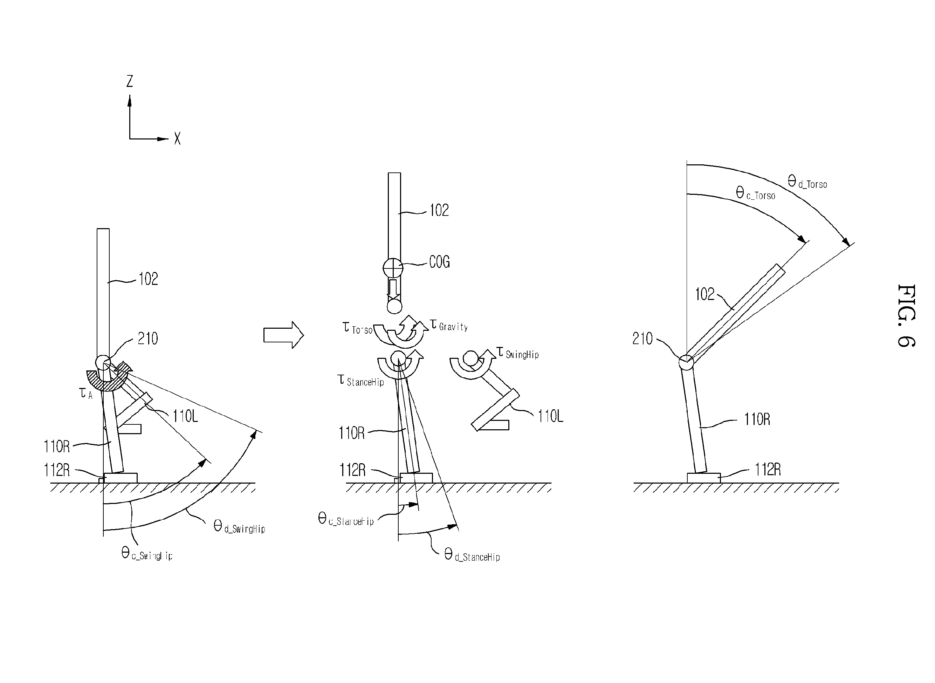

FIG. 6 is a side view showing leg states when the robot walks according to the embodiment, in which the torso 102 and the left and right legs 110L and 110R of the robot 100 are shown on an X-Z plane (2D space) of the roll direction (X-axis) and the yaw direction (Z-axis) and the states in which the robot walks forward while alternately using its feet 112L and 112R are schematically shown on the X-Z plane.

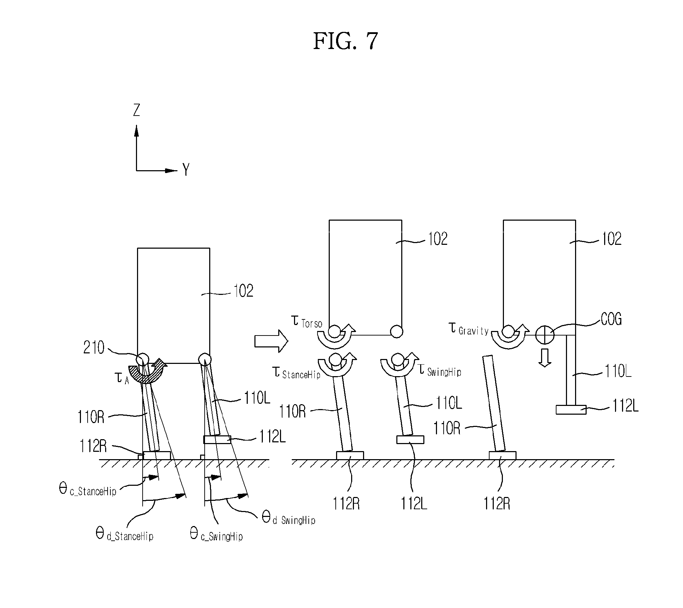

FIG. 7 is a front view showing leg states when the robot walks according to the embodiment, in which the torso 102 and the left and right legs 110L and 110R of the robot 100 are shown on a Y-Z plane (2D space) of the pitch direction (Y-axis) and the yaw direction (Z-axis) and the states in which the robot walks forward while alternately using its feet 112L and 112R are schematically shown on the Y-Z plane.

As can be seen from FIGS. 6 and 7, in the hip joint portion 210 of the leg 110R supporting the torso 102 of the robot 100, the pose control of the upper body 101 including the torso 102, the pose control of the swing leg 110L and the initial pose control of the stance leg 110R need to be simultaneously performed.

Accordingly, the torque of the leg 110R supporting the torso 102 of the robot 100 may be divided into the pose control torque τTorso of the upper body 101, the torque τSwingHip of the swing leg 110L, the initial pose control torque τStanceHip of the stance leg 110R, the gravity compensation torque τ<Gravity, and the torques τTorso, τSwingHip, τStanceHip, and τGravity are in equilibrium of force so as to finally calculate the desired torque τA of the stance leg 110R

Since a horizontal distance between the COG of the robot 100 and the action point of the torque is small in FIG. 7, but a horizontal distance between the COG of the robot 100 and the action point of the torque is large, the influence of the gravity compensation torque τGravity of FIG. 6 is greater than that of FIG. 7. Accordingly, the robot 100 is not inclined.

Hereinafter, the operation and effect of a method of controlling the walking of a robot according to an embodiment will be described.

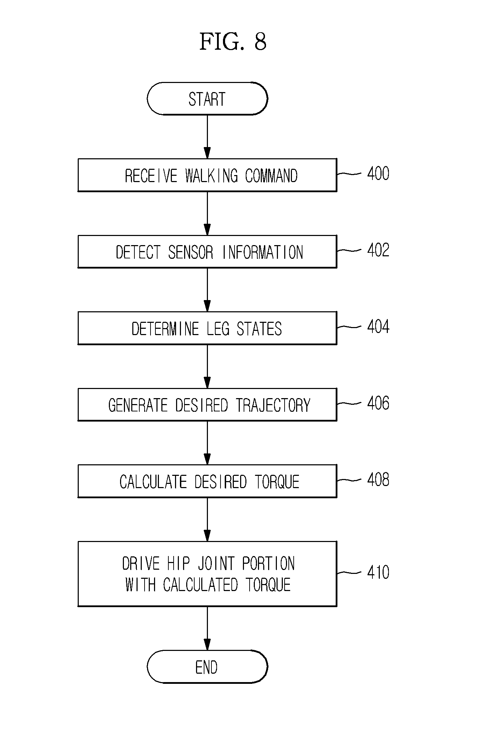

FIG. 8 is a flowchart illustrating a method of controlling the walking of the robot according to the embodiment.

In FIG. 8, a user command to indicate the walking of the robot 100 is input via the user interface 310 (400).

When a walking command is input, the pose sensor 14 mounted in the torso 102 of the robot 100 detects the inclination angle or pose of the upper body 101, and the F/T sensor 24 mounted in the foot 112 of the robot 100 detects whether the foot 112 touches the ground and transmits the detected result to the trajectory generator 332 and the trajectory compensator 335 of the walking controller 330 (402).

Accordingly, the trajectory generator 332 determines the leg state of the robot 100 by determining which of the feet 112L and 112R is in a stance state or a swing state (404) and extracts operation state data of each of the joint portions 15 and 210 corresponding to the determined leg state from the state database 331.

Subsequently, the trajectory generator 332 generates the desired angles θd of the torso 102 and the thigh of the robot 100 according to the operation state data of each of the joint portions 15 and 210 and generates and transmits the desired trajectories of the angles of the torso 102 and the thigh of the robot 100 relative to the ground based on the desired angles θd to the torque calculator 333 (406).

Accordingly, the torque calculator 333 calculates the pose control torques τTorso and τSwingHip to follow the desired trajectories of the torso 102 and the thigh generated by the trajectory generator 332 and calculates the desired torque τA to be applied to the hip joint portion 210 of the leg 110L or 110R supporting the torso 102 (408).

The desired torque τA to be applied to the hip joint portion 210 of the leg 110L or 110R supporting the torso 102 is calculated using Equation 1.

Equation 1

$$\tau A = -\tau Torso - \tau SwingHip + \tau StanceHip - \tau Gravity$$

In the torque control method, the torque of the stance leg 110L or 110R may be divided into pose control torque τTorso of the upper body 101 determined for rotating the torso 102, pose control torque τSwingHip determined for moving the swing leg 110R or 110L, initial desired torque τStanceHip for the basic pose control of the stance leg 110L or 110R and gravity compensation torque τGravity. The torques τTorso, τSwingHip, τStanceHip, and τGravity are in equilibrium of force so as to finally calculate the desired torque τA of the stance leg 110L or 110R

The pose control torque τTorso of the upper body 101 determined for rotating the torso 102, the pose control torque τSwingHip determined for moving the swing leg 110R or 110L, and the initial desired control torque τStanceHip for the basic pose control of the stance leg 110L or 110R are respectively calculated by Equations 3 to 5 using PD control.

### Equation 3

$$\tau Torso = kp(\theta d\_Torso - \theta c\_Torso) + kd(d\theta d\_Torso/dt - d\theta c\_Torso/dt)$$

### Equation 4

$$\tau SwingHip = kp(\theta d\_SwingHip - \theta c\_SwingHip) + kd(d\theta d\_SwingHip/dt - d\theta c\_SwingHip/dt)$$

### Equation 5

$$\tau StanceHip = kp(\theta d\_StanceHip - \theta c\_StanceHip) + kd(d\theta d\_StanceHip/dt - d\theta c\_StanceHip/dt)$$

Thereafter, the servo controller 334 provides the desired torque τA calculated by the torque calculator 333 to the hip joint portion 210 of the stance leg 110L or 110R so as to drive the actuator such as the motor mounted in the hip joint portion 210 (410) such that the robot 100 stably walks along the desired trajectory of the hip joint while keeping balance.

Since the torque of the stance leg 110L or 110R is finally calculated using the pose control torque τTorso of the upper body 101, the torque τSwingHip of the swing leg 110R or 110L, and the basic pose control torque τStanceHip of the stance leg 110L or 110R, the robot may stably walk with torque balance.

Since the gravity compensation torque τGravity acts, the torso 102 is not inclined when the foot 112L or 112R is raised.

In addition, since torque balance is kept, a desired operation may be performed even when low servo gain is used. Thus, energy consumption may be reduced.

Since each joint has low rigidity due to low servo gain, shock may be decreased when the robot collides with surroundings.

Since the balance of the robot 100 is kept based on the torque of the stance leg 110L or 110R, the method is simple and is applied to the robot 100 having joints with 6 degrees of freedom. However, it is not limited thereto.

Although a few embodiments of the present invention have been shown and described, it would be appreciated by those skilled in the art that changes may be made in these embodiments without departing from the principles and spirit of the invention, the scope of which is determined by the claims.

## Claims

1. A walking robot (100), comprising:

   an upper body (101);
   a plurality of walking legs (110) connected to the upper body;
   a trajectory generator (332) adapted to determine states of the plurality of legs while walking to generate a desired trajectory;
   a torque calculator (333) adapted to calculate pose control torques of the upper body and the plurality of legs which move along the generated desired trajectory and to calculate desired torque of a stance leg supporting the upper body using the calculated pose control torques; and
   a servo controller (334) adapted to transfer the calculated desired torque to a hip joint (210) of the stance leg to control the walking of the robot.

2. The walking robot according to claim 1, wherein the walking robot is a robot having two or more legs, which walks based on torque.

3. The walking robot according to any of the previous claims, wherein the states of the plurality of legs are divided into a stance state which supports the upper body and a swing state, depending on whether feet of the plurality of legs touch the ground.

4. The walking robot according to any of the previous claims, wherein the trajectory generator generates desired angles of the upper body and thighs of the plurality of legs relative to the ground according to the states of the plurality of legs and generates an inclination angle trajectory of the thigh of the stance leg relative to the ground according to the generated desired angles.

5. The walking robot according to claim 3, wherein pose control torques of the upper body and the plurality of legs include pose control torque of the upper body, pose control torque of a swing leg, and initial pose control torque of the stance leg.

6. The walking robot according to claim 5, wherein the torque calculator (333) is adapted to calculate desired torque of the hip joint of the stance leg using the pose control torque of the upper body, the pose control torque of the swing leg, and the initial pose control torque of the stance leg.

7. The walking robot according to any of the previous claims, wherein the torque calculator is adapted
   to calculate gravity compensation torque of the walking robot; and/or
   to compensate for the calculated desired torque of the hip joint using the gravity compensation torque; and/or
   to divide torque ratios of the upper body and the plurality of legs in order to control the pose of the upper body and the plurality of legs.

8. The walking robot according to any of the previous claims, further comprising:

   a state database to store leg state data of the robot, and output the stored leg state data to the trajectory generator; and/or
   a trajectory compensator (335) adapted to compensate a trajectory of the hip joint and output the compensated trajectory to the torque calculator.

9. A method of controlling a walking robot including an upper body and a plurality of legs connected to the upper body, the method comprising:

   determining states of the plurality of legs when the walking robot walks so as to generate a desired trajectory;
   calculating pose control torques of the upper body and the plurality of legs which move along the generated desired trajectory and calculating desired torque of a stance leg supporting the upper body; and
   transferring the calculated desired torque to a hip joint of the stance leg so as to control the walking of the waling robot.

10. The method according to claim 9, wherein the states of the plurality of legs are divided into a stance state which supports the upper body and a swing state, depending on whether or not feet of the plurality of legs touch the ground.

11. The method according to claim 9 or 10, wherein the generation of the desired trajectory includes generating desired angles of the upper body and thighs of the plurality of legs relative to the ground according to the states of the plurality of legs and generating an inclination angle trajectory of the thigh of the stance leg relative to the ground according to the generated desired angles.

12. The method according to claim 10, wherein pose control torques of the upper body and the plurality of legs include pose control torque of the upper body, pose control torque of a swing leg, and initial pose control torque of the stance leg.

13. The method according to claim 12, wherein the calculation of the desired torque of the stance leg includes calculating desired torque of the hip joint of the stance leg using the pose control torque of the upper body, the pose control torque of the swing leg, and the initial pose control torque of the stance leg.

**14.** The method according to any of the claims 9-13, further comprising calculating gravity compensation torque of the walking robot,
wherein the calculation of the desired torque of the stance leg compensates for the calculated desired torque of the hip joint using the gravity compensation torque.

**15.** The method according to any of the claims 9-14, wherein the calculation of the desired torque of the stance leg includes dividing torque ratios of the upper body and the plurality of legs in order to control the pose of the upper body and the plurality of legs.

# FIG. 1

# FIG. 2

FIG. 3

FIG. 4

## FIG. 5

FIG. 6

FIG. 7

# FIG. 8

```
        ┌─────────────┐
        │    START    │
        └──────┬──────┘
               │
               ▼
   ┌─────────────────────────┐
   │ RECEIVE WALKING COMMAND │ ── 400
   └────────────┬────────────┘
                │
                ▼
   ┌─────────────────────────┐
   │ DETECT SENSOR INFORMATION│ ── 402
   └────────────┬────────────┘
                │
                ▼
   ┌─────────────────────────┐
   │   DETERMINE LEG STATES   │ ── 404
   └────────────┬────────────┘
                │
                ▼
   ┌─────────────────────────┐
   │ GENERATE DESIRED TRAJECTORY│ ── 406
   └────────────┬────────────┘
                │
                ▼
   ┌─────────────────────────┐
   │  CALCULATE DESIRED TORQUE │ ── 408
   └────────────┬────────────┘
                │
                ▼
   ┌─────────────────────────┐
   │   DRIVE HIP JOINT PORTION │ ── 410
   │    WITH CALCULATED TORQUE │
   └────────────┬────────────┘
                │
                ▼
        ┌─────────────┐
        │     END     │
        └─────────────┘
```

Europäisches
Patentamt
European
Patent Office
Office européen
des brevets

## EUROPEAN SEARCH REPORT

Application Number

EP 11 15 0390

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/033475 A1 (KUROKI YOSHIHIRO [JP] ET AL) 10 February 2005 (2005-02-10) | 1-3,9,10 | INV. B25J9/00 |
| A | * paragraph [0037] - paragraph [0100] * | 4-8, 11-15 | B25J9/16 B62D57/032 |
| A | US 2009/308668 A1 (ROH CHANG HYUN [KR] ET AL) 17 December 2009 (2009-12-17) * the whole document * | 1-15 | |
| A | KR 100 837 988 B1 (SONY CORP) 13 June 2008 (2008-06-13) * the whole document * | 1-15 | |

TECHNICAL FIELDS
SEARCHED       (IPC)

B62D
B25J

The present search report has been drawn up for all claims

| Place of search | Date of completion of the search | Examiner |
|---|---|---|
| Munich | 14 April 2011 | Mingrino, Alessandra |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 15 0390

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2011

| Patent document cited in search report | | Publication date | Patent family member(s) | Publication date |
|---|---|---|---|---|
| US 2005033475 | A1 | 10-02-2005 | NONE | |
| US 2009308668 | A1 | 17-12-2009 | KR 20090128766 A | 16-12-2009 |
| KR 100837988 | B1 | 13-06-2008 | NONE | |

EPO FORM P0459

For more details about this annex : see Official Journal of the European Patent Office, No. 12/82